(19) Europäisches Patentamt
European Patent Office
Office européen des brevets

(11) **EP 2 605 210 A1**

(12) **EUROPEAN PATENT APPLICATION**

(43) Date of publication:
**19.06.2013 Bulletin 2013/25**

(21) Application number: **11306680.7**

(22) Date of filing: **15.12.2011**

(51) Int Cl.:
*G06T 5/00* (2006.01)          *G06T 5/50* (2006.01)
*H04N 5/14* (2006.01)          *H04N 5/217* (2011.01)
*H04N 5/232* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ST-Ericsson SA**
**1228 Plan-les-Ouates (CH)**

(72) Inventors:
• **Valente, Stéphane**
  **75002 PARIS (FR)**
• **Roffet, Frederique**
  **38500 COUBLEVIE (FR)**

(74) Representative: **Hirsch & Associés**
  **58, avenue Marceau**
  **75008 Paris (FR)**

(54) **Acquiring a picture representing a scene**

(57)     It is provided a method for acquiring a picture representing a scene. The method comprises providing (S10) a plurality of raw pictures representing the scene; applying (S20) a denoising filter to at least one of the raw pictures, thereby obtaining a reference denoised picture; averaging (S30) at least the rest of the raw pictures, the rest of the raw pictures being weighted increasingly according to a similarity with the reference denoised picture.

Such a method improves the acquisition of a picture representing a scene.

FIG. 2

EP 2 605 210 A1

## Description

### TECHNICAL FIELD

The invention relates to the field of signal processing, and more particularly to a method, a computer program, a data storage medium and an electronic device for acquiring a picture representing a scene.

### BACKGROUND

In low-light conditions, digital still cameras implement in general two methods to acquire a picture representing a scene.

The first method consists of using a so-called "low sensitivity configuration" (setting a long exposition duration and a low signal gain) to capture one picture with a camera. With the long exposition time, the camera lets the imaging sensor integrate enough light coming through the lens to obtain a picture with relatively low noise levels. This method suffers from two disadvantages: due to the long exposition time, the camera cannot be hand-held and must stay on a tripod. Otherwise, the acquired picture has a lot of involuntary motion blur and will lack sharpness. The second disadvantage is that moving objects in the acquired scene are also blurred by the longer integration time.

The second method consists of using a so-called "high sensitivity configuration" (setting a short exposure duration and a high signal gain) to capture one picture with a camera. With a short integration time, the camera is able to acquire a motion-blur free picture, even if it is hand-held, not on a tripod, and even if there are moving objects in the acquired scene. However, the short integration time does not allow the sensor to integrate enough photons to obtain a noise-free picture. It must be compensated by a higher signal gain, which increases even more the noise levels in the final picture, and it is necessary to resort to strong noise filters, which may further destroy the detail discrimination.

### SUMMARY

The object of the present invention is to alleviate at least partly the above mentioned drawbacks. More particularly, the invention aims at improving the acquisition of a picture representing a scene.

This object is achieved with a method for acquiring a picture representing a scene. The method comprises providing a plurality of raw pictures representing the scene. The method also comprises applying a denoising filter to at least one of the raw pictures, thereby obtaining a reference denoised picture. The method then comprises averaging at least the rest of the raw pictures, the rest of the raw pictures being weighted increasingly according to a similarity with the reference denoised picture.

This object is also achieved with a computer program comprising instructions for performing the method.

This object is also achieved with a data storage medium having recorded thereon the computer program.

This object is also achieved with an electronic device. The device comprises at least one memory having recorded thereon instructions for performing the method. The device also comprises at least one processor configured for executing the computer program recorded on the memory.

In an example, the device may further comprise an image sensor having photodiodes. The processor may be an Image Signal Processor.

In an example, the device may be a mobile communication device, for example a mobile phone.

The invention offers many advantages, including the following:

- Because the method is for acquiring a picture of the scene, the invention allows the acquisition of a materialized representation of any scene (at least as computerized data).

- Because the picture is acquired by averaging at least raw pictures, the invention reduces the noise level of the acquired picture, even if its noise is possibly distributed in a (e.g. spatially) correlated manner within a given raw picture. Indeed, even in such a case, the noise is usually distributed in an uncorrelated manner from one raw picture to another.

- As the invention allows the reduction of the noise, it allows acquiring a picture with a fairly low level of noise, without having the light-capturing device (e.g. a camera e.g. of a mobile communication device) perfectly still (e.g. without using a tripod), even in low light conditions.

- Because the raw pictures are weighted increasingly according to a similarity with a reference picture, the invention favors coherency with said reference picture during the averaging. As a result, moving objects or picture misalignments have a lower impact on the acquired picture, which is thus of higher quality, e.g. higher sharpness with fewer blurs.

- The reference picture is obtained by applying a denoising filter to at least one of the raw pictures. Thus, the reference picture is denoised beforehand, and thus of higher quality, resulting in a higher quality of the final acquired picture which has itself less noise.

Further features and advantages of the invention will appear from the following description of embodiments of the invention, given as non-limiting examples, with reference to the accompanying drawings listed hereunder.

### BRIEF DESCRIPTION OF THE DRAWINGS

FIG. 1 shows a schematic representation of an example of the electronic device,

FIG. 2 shows a flowchart of an example of the method,

FIGS. 3-31 show applications of the example of the method of FIG. 2.

## DETAILED DESCRIPTION OF EMBODIMENTS

The method may be performed based on a computer program comprising instructions for performing the method, e.g. by reading the instructions by a processor. The computer program may be executable on a programmable device. The computer program may be implemented in a high-level procedural or object-oriented programming language, or in assembly or machine language if desired. In any case, the language may be a compiled or interpreted language. The computer program may be a full installation computer program, or an update computer program. In the latter case, the computer program is an update computer program that updates a programmable device, previously programmed for performing parts of the method, to a state wherein the device is suitable for performing the whole method.

The computer program may be recorded on a data storage medium. The data storage medium may be any memory adapted for recording computer instructions. The data storage medium may thus be any form of nonvolatile memory, including by way of example semiconductor memory devices, such as **EPROM, EEPROM,** and flash memory devices; magnetic disks such as internal hard disks and removable disks; magneto-optical disks; and **CD-ROM** disks.

A device suitable for performing the method may be an electronic device comprising hardware memory, including volatile and/or non volatile memory, and having recorded thereon the computer program. The memory may store any other information used by the method. For example, the memory may store information such as the raw pictures, the reference denoised picture, and/or the weights. The memory is accessible by at least one processor, e.g. a Central Processing Unit (CPU) and/or an Image Signal Processor (ISP) of the device. The processor may execute the computer program and may thereby perform the method, without further programming of the device.

In an example, the device may further comprise an image sensor having photodiodes and the processor may be an ISP. In such a case, the device may provide the raw pictures by capturing them with the image sensor and processing them with the ISP. Such a device may thus be used as a camera.

The device may be a communication device. The device may thus comprise a signal emitter and a signal receiver. For example, the device may be a telephone. The device may be a wireless communication device. The device may be mobile (i.e. transportable). The device may for example be a mobile phone (e.g. a cell phone).

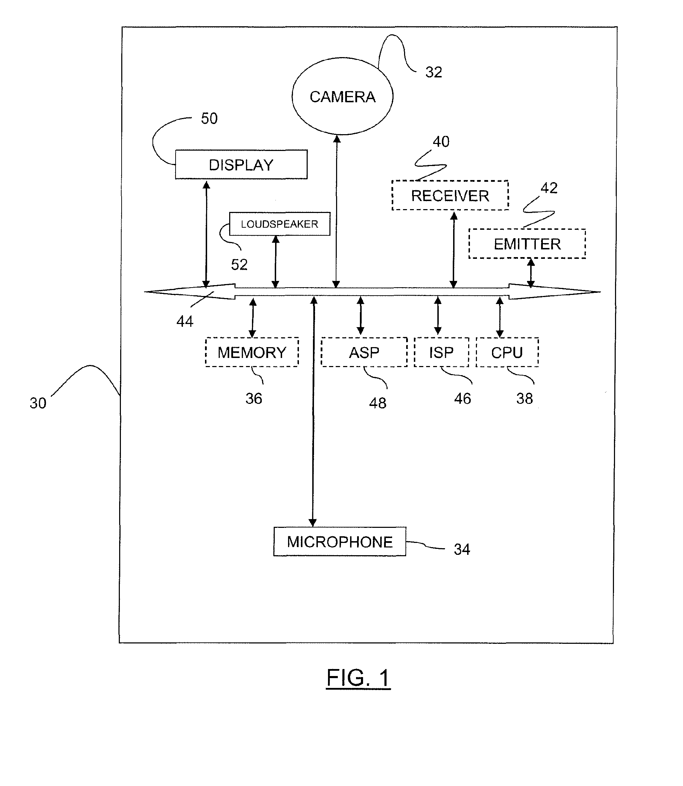

It is referred to FIG. 1 that shows a block diagram representing an example of a mobile electronic device 30, which may be a mobile phone, suitable for implementing the method.

In the example, device 30 may be used for capturing image and audio data. For this, device 30 comprises camera 32 and microphone 34 for respectively capturing image and audio data. Although not represented, camera 32 may comprise an image sensor and an analog-to-digital converter. An image sensor is a silicon device working in the analog domain: it is made of a collection of photodiodes (each of them representing a pixel) sensitive to light. When exposed to light, each photodiode is able to translate the amount of received light into an analog voltage. Then, the analog-to-digital converter converts the analog voltage into a digital number for each photodiode. Finally, the digital numbers may be processed by an ISP (Image Signal Processor), ISP 46 in the present example, to reconstruct a full digital picture (i.e. the "raw pictures"). Device 30 also comprises memory 36 which may comprise volatile and non-volatile memory (not distinguished on the figure). Memory 36 may be divided in several compartments (e.g. memory cells), possibly physically apart in device 30. Memory 36 stores, recorded thereon, instructions for performing the method, possibly already compiled or pre-compiled. Memory 36 also stores, in a volatile or non-volatile way, any captured image and audio data, and any other information used when using device 30 e.g. for performing the method. Device 30 also comprises processors including Central Processing Unit 38 (CPU), ISP 46 and Audio Signal Processor 48 (ASP). These processors access data through bus 44, process the data and circulate the data through the bus 44. Of course, fewer than three processors may physically be embodied, e.g. if one processor accomplishes all computations. On the other hand, more than three processors may physically be embodied, e.g. in the case of parallel processing. Device 30 of the example also comprises display 50 and loudspeaker 52 for outputting data, i.e. for respectively displaying image data and playing audio data. Device 30 also comprises receiver 40 and emitter 42, which are for communicating with the exterior e.g. with other devices, e.g. if device 30 is a cellular phone.

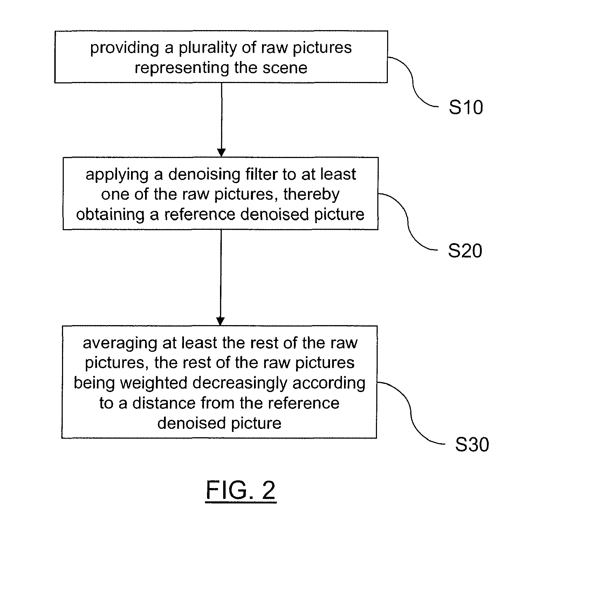

It is now referred to FIG. 2 which shows a flowchart of a general example of the method for acquiring a picture (also called "final picture" hereafter) representing a scene. The general example of FIG. 2 stands as a basic example of the method and may be combined with any example or combination of examples provided later.

The method of the example comprises providing (S10) a plurality of raw pictures representing the scene. The raw pictures are merely pictures, the adjective "raw" designating the fact that the pictures are to be further processed. A picture here designates any type of numeric image data. The pictures therefore provide an image representing the same scene. Providing (S10) the plurality of raw pictures may be performed in any way known to the one skilled in the art. Notably, it may comprise capturing the raw pictures in a time sequence (i.e. at a different time for each raw picture), e.g. with a camera of an electronic device. In such a case, the method advantageously allows the acquisition of the final picture with low temporal noise. However, alternatively the raw pictures may come from capturing a picture with different cameras.

Providing (S10) the plurality of raw pictures may comprise capturing the raw pictures with a camera. For instance, for each raw picture, the providing (S10) may comprise exposing photodiodes of an image sensor (e.g. of an electronic device executing the method, e.g. the electronic device described earlier, such as a mobile phone) to the scene. Thereby, the providing (S10) comprises reading a corresponding analog voltage for each photodiode. The providing (S10) may then comprise converting the analog voltage of each photodiode into a digital number (e.g. with any known analog-to-digital converter), and then processing the digital numbers of the photodiodes to construct the raw picture (e.g. with an Image Signal Processor e.g. of the electronic device). In an example, the time exposure of the photodiodes is the same for all the raw pictures that are provided at (S10). This allows an easy configuring of the electronic device to apply the method and an efficient running of the method.

Possibly, the providing (S10) comprises capturing the raw pictures in low light conditions with a digital camera (i.e. providing numeric image data), which may be, in such a case, of high sensitivity configuration. This arrangement is particularly useful for low light conditions below 100 Lux of scene illumination. The light sensitivity of the whole chain of a digital camera capturing a raw picture (from the analog image sensor to the output of the ISP) may be controlled by applying gains through the chain. There may be an analog gain on the photodiode voltages, applied by the sensor circuitry. There may also be a second digital gain, applied digitally by the ISP on the read pixel values. The multiplication of both gains is referred as the signal gain, effectively controlling the system light sensitivity.

Digital cameras have a sensitivity settings expressed in terms of ISO speeds. In the case of the method of the example, the camera may have a high sensitivity configuration, e.g. a configuration corresponding to a film speed higher than ISO 800, preferably ISO 1600, even more preferably ISO 3200.

The method also comprises applying (S20) a denoising filter to at least one of the raw pictures. Thereby, the method obtains a reference denoised picture. The raw picture to which the method applies a denoising filter is thus denoised, and it is called, by convention, "reference" picture. Applying a denoising filter to a given picture means processing the given picture to remove noise from the picture. In this case, the given picture may be the sole element going through the filter, which may make solely use of the data of the given picture. Any denoising filter known to the one skilled in the art may be contemplated. Notably, the denoising filter may be a spatial denoising filter, i.e. a filter modifying the given picture by identifying spatial miscorrelations.

In an example, the providing (S10) comprise capturing the raw pictures in a time sequence, in which case the method may comprise selecting the first picture to apply (S20) a denoising filter to it. This allows a faster execution of the method.

Noise in pictures comes from various factors, such as photon shot noise, thermal noise, noise from electronic analog components, digitization noise, or fixed pattern noise. Noise is generally classified as Impulse noise or Gaussian noise. Impulse noise represents isolated sick or dead pixels. Gaussian noise is relevant because the mix of all noise is commonly assumed to follow a Gaussian noise distribution which results in the following property: most of the noise levels are quite small, but some noise occurrences can be quite large. Such large occurrences and isolated pixels are the ones preferably to be eliminated in a reference picture, so that the similarity/coherency criterion correctly finds other similar pixels. This step can be done by using the signal spatial correlation and so by applying (S20) a spatial denoising filter.

A spatial denoising filter notably reduces Gaussian noise and impulse noise of the given picture, which may then serve as a better reference, resulting in a better denoising of the final picture. For example, the denoising filter may be one or a combination of an averaging filter, a median filter, and/or a bilateral filter. An averaging filter is simple to implement and efficient in run-time. A median filter allows to remove isolated high noise occurrences, like speckle noise. A bilateral filter preserves particularly well scene details.

The method then comprises averaging (S30) (i.e. merging) at least the rest of the raw pictures (e.g. according to an averaging formula). In other words, the method merges at least the remaining raw pictures (i.e. the raw pictures to which the denoising filter is not applied) by averaging them. Notably, the rest of the raw pictures may comprise at least two raw pictures. The method thereby takes advantage of the fact that a plurality of pictures are merged and the fact that, for at least part of the noise of one of the pictures, that part of the noise is not present in all of the other pictures, the average thus reducing that specific part of the noise. During the averaging (S30), the rest of the raw pictures (i.e. the arguments of the average) are weighted increasingly according to a similarity with the reference denoised picture. In other words, the averaging (S30) performs a weighted average (i.e. applies a weigthed average formula). Arguments of the weighted average, i.e. the rest of the raw pictures, have a weight in the average that increases as their similarity with the reference denoised picture increases. In other words, the weight of the rest of the raw pictures in the average is an increasing function of their similarity to the reference denoised picture.

The similarity between two pictures may be evaluated on any basis. For example, the similarity between two pictures may be evaluated on a pixel-by-pixel basis, by evaluating the absolute difference between the values of corresponding pixels of the two pictures (i.e. pixels representing the same zone of the scene). In such a case, the weights may associate a value to the different pixels of a picture (i.e. the weight of a picture is a set of values each applied to a different pixel of the picture). In such a case, the averaging (S30) may be performed by parallel processing, on a pixel-by-pixel basis, so as to gain in speed. The method may, in such a case, construct the final picture by assembling the results of weight-averaging the corresponding pixels of the rest of the raw pictures, the weight-averaging part being parallelized. In this case, different weights may be applied to different pixels of a same raw picture in the average, depending of the difference of similarity of those pixels with the corresponding blocks of the reference denoised picture. Alernatively to this case where the similarity between a given one of the rest of the raw pictures with the reference denoised picture is evaluated on a pixel-by-pixel basis, the similarity between a given one of the rest of the raw pictures with the reference denoised picture on a block-by-block basis. Here, a "block" refers to a group of neighboring pixels, as classically known from image processing. In such a case, different weights may be applied to different blocks of a same raw picture in the average, depending of the difference of similarity of those blocks with the corresponding blocks of the reference denoised picture.

By having a reference and penalizing dissimilarity from it, the method efficiently reduces noise thanks to the presence of a plurality of pictures to average while taking care of motion from a picture to another. The reference for determining motion is the reference denoised picture. Because the reference picture is a denoised picture, the method provides a more correct weighting during the averaging (S30), and a final picture of higher quality.

When providing (S10) the plurality of raw pictures comprises capturing the raw pictures with a camera, the capturing may be performed without a tripod or any other apparatus to help the camera stand still. For example, the camera may be hand-held. In such a case, the method may comprise capturing the raw pictures in a time sequence, as explained earlier. In such a case, the method may comprise, prior to the averaging (S30), aligning all the pictures to be averaged during the averaging (S30), including at least the rest of the raw pictures, as well as the reference denoised picture. As a result, pixels at a same position in the different pictures represent the same part of the scene.

Such a method allows the reduction or the elimination of fixed patterns which have no temporal correlation after picture alignment (i.e. which are not found in pictures at different times) but are not well-removable with a spatial denoising filter applied on a single picture. In essence, the same content may be captured in several sharp and noisy pictures, but the temporal noise is modified from one shot to another (some non-temporal noise, like "fixed pattern" noise linked to the fixed grid of photodiodes on the sensor, may still remain in the shots, but because of the alignment of the pictures onto a reference picture, the "fixed pattern" noise is no longer fixed, and becomes "temporal" noise). Then, combining all pictures together into a final picture allows to lower the noise levels and to increase the noise/detail discrimination.

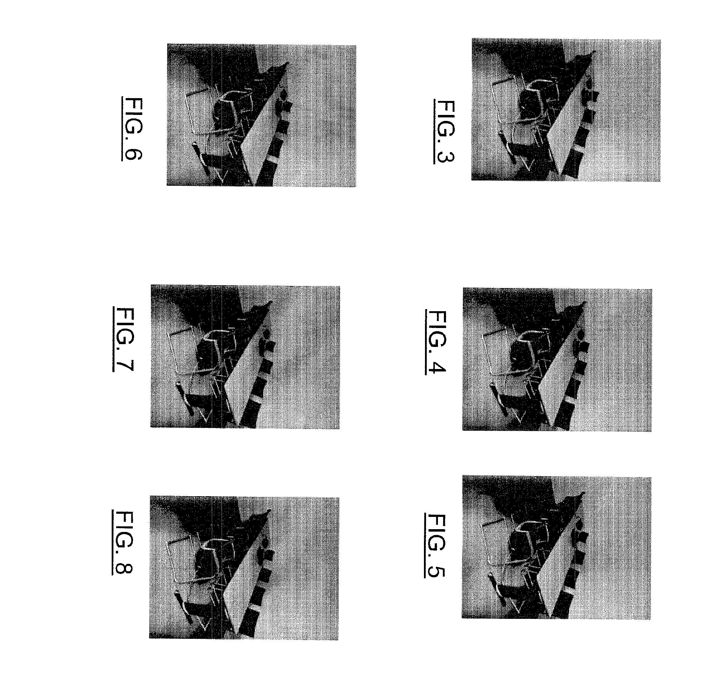

Applications of the example of the method provided at FIG. 2 are now discussed, notably with reference to FIGS. 3-28.

Without loss of generality, let us assume that the method provides (S10) six raw pictures ($j \in \{0,1,2,3,4,5\}$) representing a scene and that 'picture 0' is to be the reference picture. Let $Z_{ij}$ refer to the pixel value at position $i$ in picture $j$.

If there was no moving object across the raw pictures, if the raw pictures were perfectly aligned (i.e. no global motion is visible between one shot to the other) and if the acquisitions were noise-free, we would have $Z_{i0} = Z_{i1} = Z_{i2} = Z_{i3} = Z_{i4} = Z_{i5}$ for all pixels $i$.

But because there are usually noise levels in the raw pictures, there may be differences in $Z_{i0}$, $Z_{i1}$, $Z_{i2}$, $Z_{i3}$, $Z_{i4}$ and $Z_{i5}$ for pixel $i$. A low-noise merged picture would be obtained by simply averaging input pixels to obtain merged picture value $E_i$ constructing the merged picture according to the averaging formula (formula 1):

$$E_i = \frac{\sum_{j=0}^{p} Z_{ij}}{\sum_{j=0}^{p} 1}$$

where $p$ is the number of input pictures minus 1 (5 in the present case).

In the case of moving objects or picture misalignments, the pixels $Z_{i0}$, $Z_{i1}$, $Z_{i2}$, $Z_{i3}$, $Z_{i4}$ and $Z_{i5}$ may differ even more. This is solved by a first improvement provided by the method which performs a weighted average instead of a simple average, by adding a weighting function $c(Z_{ij}, Z_{i0})$ which favors coherent (i.e. similar) pixels, and therefore disfavors pixels that are non-coherent (i.e. non-similar) due to object motion, picture misalignments or high noise levels.

One suitable $c(\bullet)$ function is for instance

$$c(Z_{ij}, Z_{i0}) = e^{-\frac{(Z_{ij} - Z_{i0})^2}{\sigma^2}}$$

which tends towards 1 for coherent pixels and towards 0 for non-coherent ones. It is to be noted that $c(Z_{i0}, Z_{i0})$ equals 1.

A weighted average formula may thus be (formula 2):

$$E_i = \frac{\sum_{j=0}^{p} c(Z_{ij}, Z_{i0})Z_{ij}}{\sum_{j=0}^{p} c(Z_{ij}, Z_{i0})}$$

Although merging raw pictures according to formula 2 is not the method yet, tests have been performed and have shown that the scheme consisting of merging raw pictures according to formula 2 (called "scheme of formula 2" later) improves the quality of the final picture.

These tests are illustrated with reference to FIGS. 3-20 which highlight this first improvement (although these figures do not yet represent pictures acquired by the method).

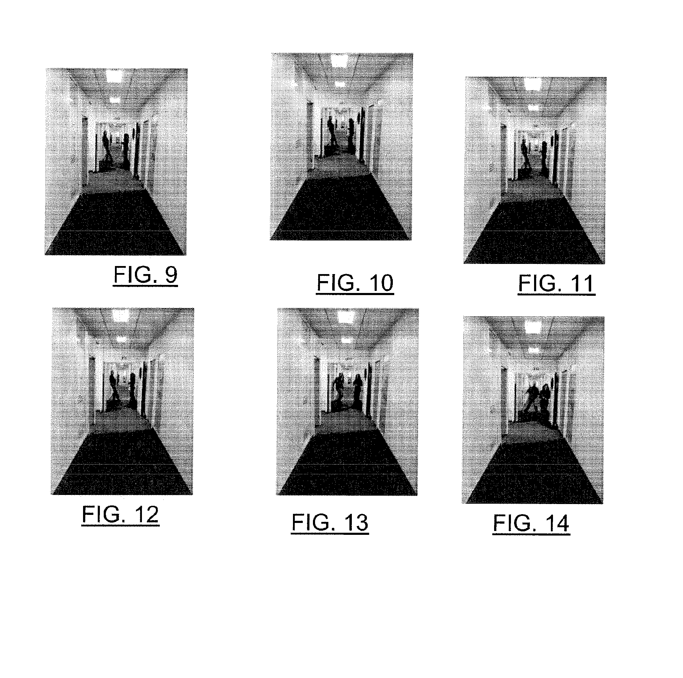

FIGS. 3-8 and FIGS. 9-14 show respectively a first set and a second set of six input pictures taken in a high sensitivity mode, without a tripod, by a digital still camera, in low light conditions, with no moving objects in the case of the first set and with moving objects in the case of the second set. 'Picture 0' is respectively represented on FIGS. 3 and 9. Although the pictures of a given set represent the same scene (a still desk with still chairs in the case of the first set and moving man and woman in a hall in the case of the second set), they are not exactly the same (even if this may be invisible to the eye, a careful study of the pictures shows that they present different noise distributions).

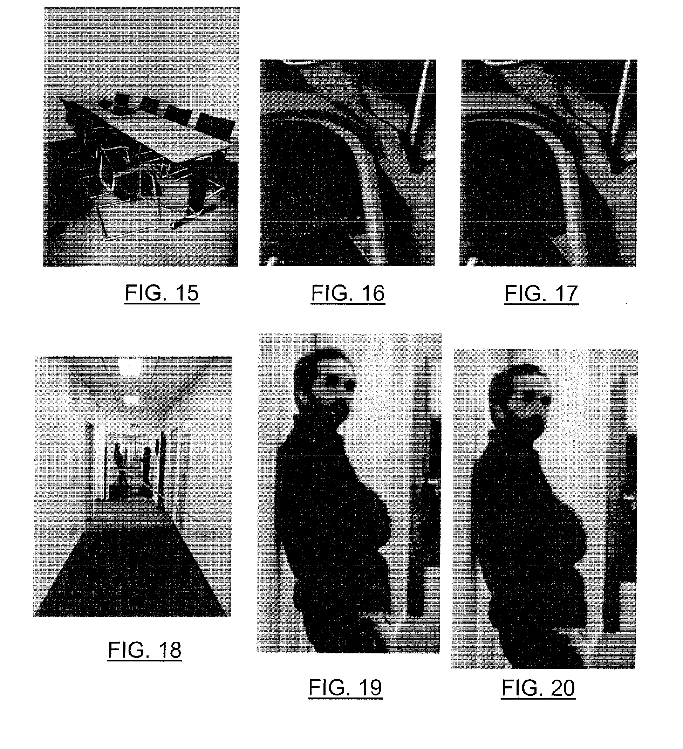

FIGS. 15-17 and FIGS. 18-20 show how the result of the merge of the six pictures according to the scheme of formula 2 improves the quality of the final picture.

FIG. 15 shows the final picture after applying formula 2 to the six raw pictures of the first set. A rectangle represents an area 150 of the scene on the figure. FIG. 16 shows a close up of 'picture 0' (i.e. the picture represented by FIG. 3) on area 150. FIG. 17 shows the same close up, but on the final picture (i.e. the picture represented by FIG. 15). As can be seen, the picture of FIG. 17 is of better quality than the picture of FIG. 16, with a higher sharpness.

Similarly, FIG. 18 shows the final picture after applying formula 2 to the six raw pictures of the second set. A rectangle represents an area 180 of the scene on the figure. FIG. 19 shows a close up of 'picture 0' (i.e. the picture represented by FIG. 9) on area 180. FIG. 20 shows the same close up, but on the final picture (i.e. the picture represented by FIG. 18). As can be seen, the picture of FIG. 20 is of better quality than the picture of FIG. 19, with a higher sharpness, even though movements were present on the second set.

Although these tests already demonstrate the advantages in terms of resulting quality (in the final picture) of the first improvement (i.e. a weighted average instead of a standard average), the method provides a second improvement. As extensively discussed earlier with reference to the general example of the method, the method uses a denoised picture as a reference for the multishots merging (i.e. the merging of a plurality of pictures comprising at least the rest of the raw pictures), instead of an original noisy picture. This further improves the quality of the final picture.

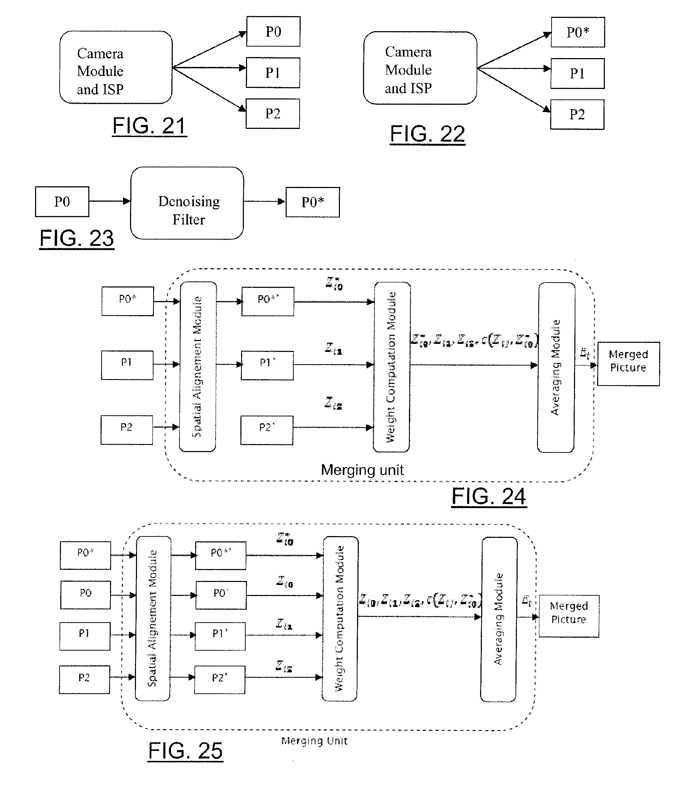

This second improvement is now discussed with reference to FIGS. 21-31.

All the examples below apply the method and notably comprise applying (S20) a denoising filter to at least one of the raw pictures, thereby obtaining a reference denoised picture.

In a first example, averaging (S30) at least the rest of the raw pictures consists of averaging the rest of the raw pictures and the reference denoised picture. In other words, the reference denoised picture is also part of the arguments of the averaging function. This increases the data to average and statistically provides a better final quality.

For example, the method provides (S10) (reference) 'picture 0', and applies (S20) a denoising filter on it, e.g. preserving the image contents but redistributing the noise characteristics of the input picture. This denoised reference picture (denoted $Z_{i0}^{*}$) replaces the reference 'picture 0', and the other raw pictures are merged onto it.

The averaging formula is:

$$E_i = \frac{Z_{i0}^{*} + \sum_{j=1}^{p} c(Z_{ij}, Z_{i0}^{*})Z_{ij}}{1 + \sum_{j=1}^{p} c(Z_{ij}, Z_{i0}^{*})}$$

In a second example, averaging (S30) at least the rest of the raw pictures consists of averaging the rest of the raw pictures and the raw picture to which a denoising filter is applied. In other words, the reference picture (not denoised), i.e. the raw picture to which a denoising filter is applied, is also part of the arguments of the averaging function. This increases the data to average and statistically provides a better final quality.

For example, the method provides (S10) 'picture 0', and applies (S20) a denoising filter on it to obtain $Z_{i0}^{*}$. The difference with the first example is that $Z_{i0}^{*}$ is only used as a reference picture for non-moving objects in the weight computation, and 'picture 0' is also used in the merging process.

The averaging formula is:

$$E_i = \frac{\sum_{j=0}^{p} c(Z_{ij}, Z_{i0}^{*}) Z_{ij}}{\sum_{j=0}^{p} c(Z_{ij}, Z_{i0}^{*})}$$

In a third example, combinable to the first or the second example, the Image Signal Processor (of an electronic device executing the method, such as any of the ones described earlier) further applies (S20) the denoising filter to at least one of the raw pictures. This allows a simple adaptation of existing electronic devices to adapt them for performing the method.

ISPs commonly embed dedicated denoising filters that have parameters and strengths controlled by software. The denoised 'picture 0' may thus be obtained directly from the ISP, by setting strong denoising parameters. In such a case, once 'picture 0' is provided (S10) and the denoising filter is applied (S20) to it, the ISP is configured to provide (S10) the remaining raw pictures with lower (or no) denoising parameters. This results in a gain of speed.

FIGS. 21-25 provide flowcharts illustrating examples of the method. For the sake of simplicity, the flowcharts show the acquisition of only three pictures, labeled P0, P1 and P2, but this number is configurable.

FIG. 21 represents a flowchart of providing the raw pictures: using appropriate control parameters, the camera module and its associated ISP are configured into a high sensitivity mode (short exposure time, high signal gain) to take two or more successive shots of a scene, keeping the exposition parameters fixed.

FIG. 22 shows a flowchart corresponding to the third example: in this example, the camera module and ISP are configured into a high sensitivity mode, but the first ouput picture P0* is obtained by setting the ISP parameters to strongly denoise the first picture P0 using its internal denoising functions. Then, keeping the exposition parameters unaltered, the camera module and ISP output pictures P1 and P2, using no, or lighter, denoising parameters.

FIG. 23 shows a flowchart of a fourth example, wherein the method applies (S20) the denoising filter on picture P0 and produces the denoised picture P0*, separately from the capturing of picture P0.

In any case, the denoised picture P0* and raw pictures P1, P2 are then fed into an averaging unit, which performs the merging according to one of the proposed first or second examples. The merging unit may output a merged low-light denoised picture.

FIG. 24 illustrates the flowchart of the averaging unit of the first example. A first spatial alignment module takes the input raw pictures and aligns them into the referential of the denoised picture P0*, by using for instance normalized correlation. It produces the spatially registered pictures P0*′, P1′ and P2′. Then, a weight computation module extracts the pixels $Z_{i0}^{*}$, $Z_{i1}$ and $Z_{i2}$ cor-

responding to the same spatial location in the aligned pictures. It computes the weights $c(Z_{ij}, Z_{i0}^{*})$ associated to the pixels given the denoised reference $Z_{i0}^{*}$, and transfers them to an averaging module. This module computes the weighted average of the input pixels according to $E_i = \dfrac{Z_{i0}^{*} + \sum_{j=1}^{p} c(Z_{ij}, Z_{i0}^{*}) Z_{ij}}{1 + \sum_{j=1}^{p} c(Z_{ij}, Z_{i0}^{*})}$ to produce the merged pixel value E, constructing the merged output picture.

FIG. 25 illustrates the flowchart of the averaging unit of the second example. By comparison with the first example, the spatial alignment module also outputs a spatially aligned picture P0′, corresponding to undenoised picture P0 initially in the set of raw pictures. The weight computation module outputs an additional weight $c(Z_{i0}, Z_{i0}^{*})$ for pixels extracted from P0′, and the averaging performed by the averaging module is

$$E_i = \frac{\sum_{j=0}^{p} c(Z_{ij}, Z_{i0}^{*}) Z_{ij}}{\sum_{j=0}^{p} c(Z_{ij}, Z_{i0}^{*})} .$$

Tests have been performed to illustrate the noise reduction performed by the method. In essence, the second example of the method was tested with the raw pictures of the first set (FIGS. 3-8) and second set (FIGS. 9-14). The final picture was then compared to the result of averaging with weights the raw pictures and the reference picture, but without applying (S20) a denoising filter to the reference picture (i.e. by applying the scheme of formula 2). It was concluded that the quality of the final picture was indeed better with the method. For example, some noise leading to white points in the final picture were removed with the method.

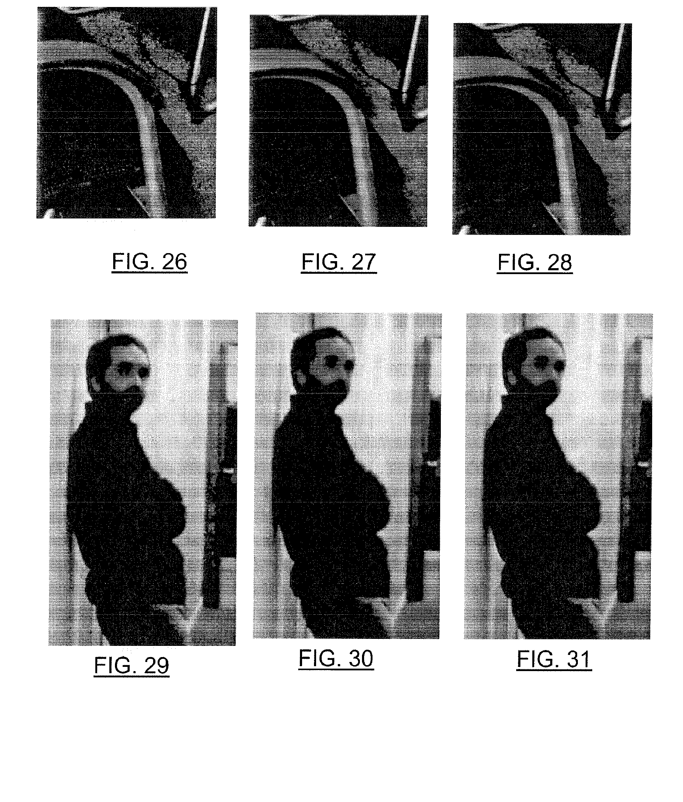

These tests are illustrated with reference to FIGS. 26-31.

FIG. 26 is the same as FIG. 16. FIG. 27 is the same as FIG. 17. FIG. 26 shows a close up of 'picture 0' of the first set (i.e. the picture represented by FIG. 3) on area 150 of FIG. 16. FIG. 27 shows the same close up, but on the final picture obtained by applying the scheme of formula 2. FIG. 28 shows the final picture obtained by applying the second example of the method. As can be seen, the quality of the final picture in FIG. 28 is higher than in FIG. 27.

FIG. 29 is the same as FIG. 19. FIG. 30 is the same as FIG. 20. FIG. 29 shows a close up of 'picture 0' of the second set (i.e. the picture represented by FIG. 9) on area 180 of FIG. 18. FIG. 30 shows the same close up, but on the final picture obtained by applying the scheme of formula 2. FIG. 31 shows the final picture obtained by applying the second example of the method. As can be seen, the quality of the final picture in FIG. 31 is higher than in FIG. 30, even though there are movements in the data of the second set.

**Claims**

1. A method for acquiring a picture representing a scene, wherein the method comprises:

  providing (S10) a plurality of raw pictures representing the scene,
  applying (S20) a denoising filter to at least one of the raw pictures, thereby obtaining a reference denoised picture,
  averaging (S30) at least the rest of the raw pictures, the rest of the raw pictures being weighted increasingly according to a similarity with the reference denoised picture.

2. The method of claim 1, wherein providing (S10) the plurality of raw pictures comprises capturing the raw pictures in a time sequence.

3. The method of claim 1 or 2, wherein the denoising filter is a spatial denoising filter.

4. The method of any of claims 1-3, wherein the denoising filter is one or a combination of an averaging filter, a median filter, a bilateral filter.

5. The method of any of claims 1-4, wherein averaging (S30) at least the rest of the raw pictures consists of averaging the rest of the raw pictures and the reference denoised picture.

6. The method of any of claims 1-4, wherein averaging (S30) at least the rest of the raw pictures consists of averaging the rest of the raw pictures and the raw picture to which a denoising filter is applied.

7. The method of any of claims 1-6, wherein the similarity between a given one of the rest of the raw pictures with the reference denoised picture is evaluated on a pixel-by-pixel basis or on a block-by-block basis.

8. The method of any of claims 1-7, wherein providing (S10) the plurality of raw pictures comprises, for each raw picture, exposing photodiodes of an image sensor to the scene, thereby reading a corresponding analog voltage for each photodiode, then converting the analog voltage of each photodiode into a digital number, and then processing the digital numbers of the photodiodes to construct the raw picture with an Image Signal Processor.

9. The method of claim 8, wherein the Image Signal Processor further applies (S20) the denoising filter to at least one of the raw pictures.

10. A computer program comprising instructions for performing the method of any of claims 1-9.

11. A data storage medium having recorded thereon the computer program of claim 10.

12. An electronic device, wherein the device comprising:

  at least one memory having recorded thereon instructions for performing the method of any of claims 1-9, and
  at least one processor configured for executing the computer program recorded on the memory.

13. The device of claim 12, wherein the device further comprises an image sensor having photodiodes and the processor is an Image Signal Processor.

14. The device of claim 12 or 13, wherein the device is a mobile communication device.

FIG. 1

providing a plurality of raw pictures
representing the scene

S10

applying a denoising filter to at least
one of the raw pictures, thereby
obtaining a reference denoised picture

S20

averaging at least the rest of the raw
pictures, the rest of the raw pictures
being weighted decreasingly according
to a distance from the reference
denoised picture

S30

## FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

Camera Module and ISP → P0, P1, P2

FIG. 21

Camera Module and ISP → P0*, P1, P2

FIG. 22

P0 → Denoising Filter → P0*

FIG. 23

P0* → Spatial Alignement Module → P0*' — $Z_{i0}^*$

P1 → P1' — $Z_{i1}$

P2 → P2' — $Z_{i2}$

Weight Computation Module → $Z_{i0}^*, Z_{i1}, Z_{i2}, c(Z_{ij}, Z_{i0}^*)$ → Averaging Module — $E_i$ → Merged Picture

Merging unit

FIG. 24

P0* → Spatial Alignement Module → P0*' — $Z_{i0}^*$

P0 → P0' — $Z_{i0}$

P1 → P1' — $Z_{i1}$

P2 → P2' — $Z_{i2}$

Weight Computation Module → $Z_{i0}, Z_{i1}, Z_{i2}, c(Z_{ij}, Z_{i0}^*)$ → Averaging Module — $E_i$ → Merged Picture

Merging Unit

FIG. 25

FIG. 26

FIG. 27

FIG. 28

FIG. 29

FIG. 30

FIG. 31

Europäisches
Patentamt

European
Patent Office

Office européen
des brevets

## EUROPEAN SEARCH REPORT

Application Number

EP 11 30 6680

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/119480 A2 (SONY DEUTSCHLAND GMBH [DE]; LEI ZHICHUN [DE]; UNRUH CHRISTIAN [DE]; SI) 9 October 2008 (2008-10-09) * page 5, line 33 - page 6, line 3 * * page 12, lines 27-29 * * page 27, lines 9-13 * ----- | 1-14 | INV. G06T5/00 G06T5/50 H04N5/14 H04N5/217 H04N5/232 |
| X | US 2010/188535 A1 (MITSUYA KOJI [JP] ET AL) 29 July 2010 (2010-07-29) * paragraphs [0094], [0095], [0103]; figure 1 * ----- | 1-14 | |
| X | US 2010/165122 A1 (CASTORINA ALFIO [IT] ET AL) 1 July 2010 (2010-07-01) * paragraphs [0097] - [0101]; figures 15,16,17 * ----- | 1-14 | |
| A | US 2006/114994 A1 (SILVERSTEIN D AMNON [US]) 1 June 2006 (2006-06-01) * paragraphs [0056], [0057]; figure 7 * ----- | 1-14 | |
| A | EP 1 933 271 A1 (FUJITSU LTD [JP]) 18 June 2008 (2008-06-18) * paragraphs [0034], [0051]; figure 1 * ----- | 1-14 | TECHNICAL FIELDS SEARCHED (IPC) G06T H04N |
| A | Mehmet K. Ozkan: "Motion-adaptive weighted averaging for temporal filtering of noisy image sequences", SPIE , vol. 1657 10 February 1992 (1992-02-10), pages 201-212, XP002669758, DOI: 10.1117/12.58328 Retrieved from the Internet: URL:http://spiedigitallibrary.org/proceedings/resource/2/psisdg/1657/1/201_1 [retrieved on 2012-02-02] * paragraph 3 - page 206, paragraph 1 * ----- | 1-14 | |

The present search report has been drawn up for all claims

| Place of search | Date of completion of the search | Examiner |
|---|---|---|
| The Hague | 17 February 2012 | Zakharian, Andre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 30 6680

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2012

| Patent document cited in search report | | | Publication date | Patent family member(s) | | | Publication date |
|---|---|---|---|---|---|---|---|
| WO 2008119480 | A2 | | 09-10-2008 | CN<br>US<br>WO | 101658027<br>2010091194<br>2008119480 | A<br>A1<br>A2 | 24-02-2010<br>15-04-2010<br>09-10-2008 |
| US 2010188535 | A1 | | 29-07-2010 | CN<br>JP<br>US | 101790031<br>2010171753<br>2010188535 | A<br>A<br>A1 | 28-07-2010<br>05-08-2010<br>29-07-2010 |
| US 2010165122 | A1 | | 01-07-2010 | NONE | | | |
| US 2006114994 | A1 | | 01-06-2006 | NONE | | | |
| EP 1933271 | A1 | | 18-06-2008 | EP<br>JP<br>US<br>WO<br>WO | 1933271<br>4553942<br>2008187234<br>2007032082<br>2007032156 | A1<br>B2<br>A1<br>A1<br>A1 | 18-06-2008<br>29-09-2010<br>07-08-2008<br>22-03-2007<br>22-03-2007 |

For more details about this annex : see Official Journal of the European Patent Office, No. 12/82

EPO FORM P0459